# EUROPEAN PATENT SPECIFICATION

(11) **EP 1 555 891 B1**
(45) Date of publication and mention of the grant of the patent: **02.08.2006**
(21) Application number: 03755703.0
(22) Date of filing: 06.10.2003
(51) Int. Cl.: A23K 1/00, A23K 1/18

(54) **FEED BLOCK**
FUTTERMITTELBLOCK
BLOC ALIMENTAIRE

(30) Priority: 07.10.2002 NO 20024830; 01.10.2003 NO 20034404
(43) Date of publication of application: 27.07.2005
(73) Proprietor: TROUW INTERNATIONAL B.V., NL-5831 JN Boxmeer (NL)
(72) Inventor: HOFF, Kjell, Arne, N-4317 Sandnes (NO)
(74) Representative: Smart, Peter John
(86) International application number: PCT/NO2003/000333
(87) International publication number: WO 2004/030466

(56) References cited:
- WO-A1-85/02322
- WO-A1-98/47392
- US-A- 4 935 250
- US-A- 5 622 744
- US-A- 5 650 184

## Description

This invention regards production of feed particles that are suitable as feed for large fish in fish farming. Large fish refers to fish weighing more than approximately 4 kg, or fish adapted to feed on prey of a relatively large size, relative to the body weight of the fish itself. The invention also relates to the production of a feed for animals held in captivity, such as birds and marine mammals.

In intensive fish farming such as farming of salmon and rainbow trout in seawater, the use of dry feed is almost exclusive. The water content of these feed particles is below 10%. The water activity is low so as to avoid the growth of bacteria, mould and fungus. It is therefore possible to store such feed for an extended period of time. The cross section of the feed particles may vary, however the largest diameter is typically 12 mm, with a length/diameter ratio of between approximately 1:1 and approximately 1.5:1. Feed particles with a diameter of 12 mm will typically weigh approximately 1.5 - 2.5 grams.

The normal slaughter weight of farmed salmon and trout is approximately 4 - 6 kg, but may be up to 7 - 8 kg for certain markets. In terms of production, this is a favourable size for the farmer. Larger fish will become sexually mature, with a subsequent loss of meat quality. Also, larger fish requires a longer farming period, which entails a greater tie-up of the farmer's capital.

Under good conditions and at the highest rate of growth of the salmon and trout, the daily intake of feed will be in excess of 1% of the body weight, and for some specimens up to 3% on some days. This means that a 4 kg fish can eat up to 120 g of dry feed per day, the equivalent of approximately 80 feed particles per day.

Salmon and trout are adapted to a life as active hunters, preferably hunting near the surface. In farming, they get accustomed to hunting for feed particles sinking slowly through the body of water. When salmon and trout are transferred from fresh water to seawater, their weight will normally be between 40 and 150 grams. This fish is used to eating feed particles with a diameter of between 2 and 3 mm. As the fish grows, the feed particle size is increased so as to reach about 9 - 12 mm when the body weight of the fish is over 2 kg.

Atlantic halibut (Hippoglossus hippoglossus) is a new species in commercial fish farming. Halibut is a flatfish that lives on the bottom of the sea. The flat shape means that the fish must be at least 4 kg before the yield from filleting justifies slaughtering. Halibut hunts for prey by making sudden lunges from a hidden position on the seabed. In farming, it will remain still at the bottom of the tank/cage for much of the time. As such, the halibut will "assess" whether it pays to hunt for small particles of food, in terms of energy.

The female halibut reaches sexual maturity at a late stage, weighing 30 - 100 kg before spawning. Intensive fish farming relies on the availability of artificially inseminated eggs in order to produce predictable amounts of spawn. Consequently, it is necessary to have access to broodstock in captivity. Fish of this size is not "interested" in feed particles weighing only 2 - 3 grams. Therefore, brood halibut is fed with wet feed. This is prepared locally as a mixture of ground fresh fish or ground fresh or acid preserved fish offal, fish meal, binding agents (e.g. wheat starch), fish oil, minerals and vitamins. This is mixed to form a paste which can be fed out as large lumps or be filled in sausage skins. Some also use whole fish with added capsules of vitamins.

Another type of farming consists in catching small tuna fish (10 - 30 kg) and feeding this up to market size (60 - 80 kg). This farming also calls for the production of feed of a size suited to the size of the fish.

Most of the feed used in today's intensive fish farming is so-called dry feed produced on a large scale. The ingredients consist of vegetable protein, animal protein (preferably fish meal), fish oil, vegetable oils, binding agents, minerals, and vitamins and possibly colouring agents. The dry ingredients are mixed to a paste by adding water and steam, and then formed into pellets by extruding the paste through die gaps in an extruder, pelleting machine or other suitable device, in order then to cut the strings of paste into appropriate lengths. The moulded pellets contain too much water, typically approximately 22% by weight. These must be dried until their water content is between 10 and 15%. Following the drying process, oil is added, which soaks into the pores of the pellets. The end product, the finished feed pellet, will typically contain 5 - 10% water, 25 - 40% fat, 30 - 40% protein, in addition to binding agents, minerals, vitamins and colouring agents.

The ingredients for industrially produced feed pellets/dry feed are dry ingredients such as fish meal, wheat, soya, corn gluten, minerals and vitamins (in the form of pre-mixes), together with oils such as fish oil and vegetable oils (e.g. rape seed oil and soya oil). These ingredients are characterised in that they can be transported and stored as bulk goods, and in that they have a low water content to make it easy to avoid undesirable decomposition and formation of fungus and mould. One advantage of dry and bulk ingredients is the simple logistics and the potential of being able to buy the ingredients all over the world. Another advantage is that the ingredients may be combined in different proportions of ingredients, to allow production of a feed with a nutritional value that is suited for the species for which the feed is intended. Among other things, the ratio between proteins and fat may be varied within a wide range. A third advantage of the industrially produced dry feed is that it is easy to store and transport, making it readily available to the farmer just when it is needed.

An alternative to the industrially produced feed is local production of feed based on fresh and frozen fish, as well as fresh and preserved fish offal. These types of feed are termed wet feed or soft feed.

Preserved fish offal may be frozen materials or offal to which organic acid or other preservatives have been added. This wet material is mixed with a suitable binding agent such as potato or wheat starch, fat (e.g. fish oil) and vitamins, minerals and possibly colouring agents. The mixing can take place in e.g. an appropriate grinder. The pasty mass may be moulded into continuous, relatively loose pieces by pressing it through an apertured disc, or it may be fed out as is, by means of a spoon or scoop shaped utensil. It may also be filled in e.g. sausage skins in order to give the feed a firmer shape.

There has been a wish to have the option of using local raw materials such as offal from the fish processing industry and any by-catches from the fisheries, in a more industrial production of pelleted wet feed. Therefore the RUBIN-foundation (Recirculation and utilisation of organic byproducts in Norway) has developed the so-called "RUBIN-feed". This is a gelled wet feed containing approximately 70% fresh or frozen fish and/or fish offal, 10% fish oil, 10% wheat flour, 5% fish meal, 5% kelp, minerals, vitamins and optionally colouring agents. It also contains calcium carbonate to make the alginate in the kelp jellify. After the ingredients have been mixed and pelleted, the pellets are passed through a jellification bath containing weak formic acid.

Another method of making gelled wet feed has been disclosed in Norwegian patent no. 309673 (WO 01/01792). Essentially, the method differs from the "RUBIN"-feed in that the raw animal or marine protein material is pre-treated with a base, and that it does not contain fishmeal and wheat flour to bind water. Alginate or pectin may be used as a jellification agent.

Alginate has also been used as a binding agent together with dry feed ingredients. Thus publication WO 95/28830 describes the production of a feed consisting of 0.5 - 10% alginate. Alginate is mixed with the normal feed ingredients and water to form slurry. The mass is then exposed to divalent cations so as to form a water stable gel, and this is then moulded into pellets.

Norwegian patent no. 95894 describes the production of a fish feed where the ingredients are dissolved in water, and to which is added water-soluble gel-forming components such as Na-alginate. A calcium salt and a phosphate are also added, to act as a retarding agent. A gel-like continuous mass is then formed. The mass excluding calcium salt may also be sprayed into a coagulation bath consisting of a calcium salt. The patent also describes a method where the nutrients and the Na-alginate solution are forced through a double-walled die, so that the nutrients are forced through an inner die while the Na-alginate solution is applied through the outer die.

Norwegian patent application no. 910390 describes the production of a gelled wet feed with an adjustable structure and sinking speed. This feed is composed of a material that generates CO₂ under acid conditions (e.g. shrimp shells), an acid forming material (e.g. ensiling acid), alginate or another gel-forming component, and proteins and fat.

US patent no. 3 889 007 describes the production of a gelled wet feed consisting of fishmeal, glue water, fish oil and gelatine. Binding agents such as guar gum, agar, carboxymethyl cellulose and alginate may be used. This feed dissolves slowly in water, and is intended especially for shrimp farming.

US patent no. 4 935 250 describes a method of covering the surface of a conventionally produced dry feed with a film of alginate or guar gum. Tragant gum, pectin or gelatine may also be used. The aim is to improve the palatability of the dry feed by giving each pellet a soft and flexible surface.

It is possible to increase the diameter of dry feed past today's sizes. Thus for experimental purposes, feed pellets have been produced with a diameter of up to 30 mm. With a length equal to 1.5 x the diameter, the largest of the pellets will weigh over 30 grams, making them considerably larger than today's dry feed.

The pellets may contain 20% water or more after moulding, and must be dried in order to give them storage stability. During drying, water must be removed from the surface. Water inside the pellets must diffuse out to the surface before it can be removed. The drying time increases with the pellet diameter. Feed pellets having a diameter of more than 20 mm require a relatively long drying time compared with pellets having a diameter of up to 12 mm.

A solution to the diffusion problem has been sought e.g. by forming the feed pellet with one or more through holes in the longitudinal direction of the pellet. This reduces the distance from a surface to the point inside the pellet furthest from a surface. This distance is a controlling factor for the required drying time. Such a pellet shape is described among other things in Norwegian patent application no. 950139. A disadvantage of such a pellet shape is that it will easily break or crush during the subsequent drying, fat saturation, cooling and packing.

For the industry it is an advantage to be able to produce different pellets using the same production equipment on a production line. A longer drying time means that the capacity of the drying plant is reduced, thereby reducing the capacity of the entire production line.

The pelleting machines (e.g. extruders) operate continuously, and there is a limit to how low the production volume can be set without the process coming to a stop. Therefore there is a relationship between the pellet diameter, drying time and production volume. If the pellet diameter exceeds a critical limit the drying time will be too long, and the capacity of the line falls below the limit at which the pelleting machine can be operated continuously. Prior art therefore limits the size of the pellets that can be produced.

A reduced capacity also means that the overheads are distributed over a smaller feed production, making the production cost of large pellets excessive.

Large pellets are more prone to breakage than small pellets. Therefore, more binding agents must be added, e.g. wheat. In order to achieve good pre-sizing of the starch in the wheat, thermal and mechanical energy must be added e.g. in the extruder cylinder. When the aperture in the die body has a diameter of 30 mm or more, this approaches the diameter of the front plate of the extruder. The result is that the required pressure build-up in the extrudate fails to occur. This results in the starch not pre-sizing well enough to provide good binding, the ingredients of the feed are not mixed well enough, and it becomes difficult to form the extrudate into pellets.

The gelled feed products that are based on fresh or frozen fish or fish offal are dependent on a regular supply of these raw materials, or sufficient freezing capacity. Preserved and ensiled raw materials can not be used to produce e.g. the "RUBIN" feed. If no preservatives are added to the gelled feed product, the product will have a limited shelf life and must be used within days of production. Alternatively the product can be frozen; however this increases the costs further, and the thawing of the ready feed also presents problems.

In terms of nutrition, feed products based on whole fish or fish offal will vary with the type of fish used as raw materials. The amount of fat will depend on whether the fish used is fatty fish (e.g. herring or capelin) or lean white fish (e.g. cod or pollack).

The object of the invention is to remedy the disadvantages of

### prior art.

The aim is to produce a feed, in particular a fish feed, having a significantly greater diameter and length than that which is commercially available. The feed is intended for e.g. cod, halibut and tuna.

Another aim is to produce a large-size fish food based on dry or bulk ingredients, which are easy to transport and store and not seasonally dependent such as ingredients in the form of fish offal or whole fish.

A third aim is to produce a large-size formulated fish feed. The protein and fat contents must be variable within a wide range and be suited for the type of fish for which the feed is intended, but it should also be possible to produce the selected formulation or feed composition regardless of the time of year.

A fourth aim is to produce a formulated feed for animals in captivity. The feed is given a suitable shape, e.g. a fish shape, representing an alternative to whole fish when feeding birds such as penguins or marine mammals such as seals or dolphins.

The object is achieved in accordance with the invention by the characteristics given in the description below and in the appended claims.

Pellets of the dry feed type are produced in a known manner and then "glued" together to form larger pieces by embedding or enclosing the pellets in a binding agent. The binding agent can be a gel consisting of e.g. alginate or gelatine. Alternatively, the binding agent can be a fat, which remain firm at any of the feed's temperatures of usage and storage, e.g. consisting of lard, sebaceous matter or hardened fat. Thus the invention comprises the gluing together of two or more pellets of the dry feed type.

The gel is prepared in a known manner by mixing a jellification substance and a liquid. Dry pellets are then added to this gel-containing liquid; alternatively the gel-containing liquid is added to the pellets. The pellets and the gel-containing liquid are filled in the mould, which, after the gel has set, will shape the feed block. Alternatively, dry pellets and gel-containing liquid are mixed in a continuous process where the mixture is shaped into a string and cut into pieces of an appropriate length after the jellification process is finished, or optionally at a point where the jellification process has gone far enough that the pieces will be connected after cutting. The shaped string may have various cross sectional shapes, e.g. a circular, oval or rectangular cross section.

Some jellification reactions depend on special ions or acidity for the jellification to take place. For instance, an alginate gel will jellify in the presence of Ca²⁺ ions and at a low pH. When using alginate, the added Ca²⁺ ions may come in the form of CaCl₂ added to the jellification liquid, and the mixture is forced through a die relief in order to be shaped into a string in a manner such that the string is forced out into a jellification bath containing dilute formic acid.

A feed block produced as described in the invention using gel as a binding agent, will have a high water content. Thus the addition of preservatives is appropriate in order to allow the feed block to be stored. The dry pellets that form the basis of the feed block may contain a preservative, the jellification liquid may contain a preservative, or the preservatives may be contained in both the dry pellets and the jellification liquid. If the feed block is to be used relatively soon after production, storing the feed block at a low temperature without preservatives will be sufficient.

When using gel as a binding agent, the surface of the feed block will be soft but firm. The entire feed block will be elastic. Thus the texture of the feed block will bear a closer resemblance to a whole fish or other prey than the dry feed does. This is considered especially advantageous when it comes to making the feed block more acceptable to the fish. In particular, it will ease the transition to formulated feed for wild fish caught in order to be farmed to market size.

When using fat as a binding agent, a suitable fat for conglutination of two or more pellets of the dry feed type is firm at 25 °C. Such fat can be lard, sebaceous matter, palmitic acid, stearic acid or hardened fat of animal or vegetable origin, or a mixture of vegetable and animal fat. The fat is melted in a known manner and the liquid fat is added to the dry pellets. Alternatively, dry pellets are added to the liquid fat. The pellets and the liquid fat are filled in moulds, which, after the fat has stiffened, will shape the feed block. Alternatively, dry pellets and liquid fat are mixed in a continuous process where the mixture is shaped into a string and cut into pieces of an appropriate length after the stiffening process is finished, or optionally at a point where the added liquid fat has become cold enough that the pieces will not break apart after cutting. The shaped string may have various cross sectional shapes, e.g. a circular, oval or rectangular cross section.

Such a feed block will be shelf stable and show great mechanical strength. By varying the level of expansion of the dry pellets and/or by varying the water content of the dry pellets and/or by varying the content of fat in the dry pellets, feed blocks with different density are obtained. Gas bubbles can also be blown into the binding fat before it has stiffened in order to further reduce the density of the feed block. Thus, feed blocks, which sink in water and feed blocks, which float on the water, can be achieved. This makes possible other feeding techniques than those commonly used today, where the feed is distributed on the water surface. Thus, the feed can be supplied at the bottom of breeding vessels, breeding tanks or breeding cages, and feed that is not eaten can be collected on the surface.

The following describes a non-limiting example of a preferred embodiment illustrated in the accompanying drawings, in which:

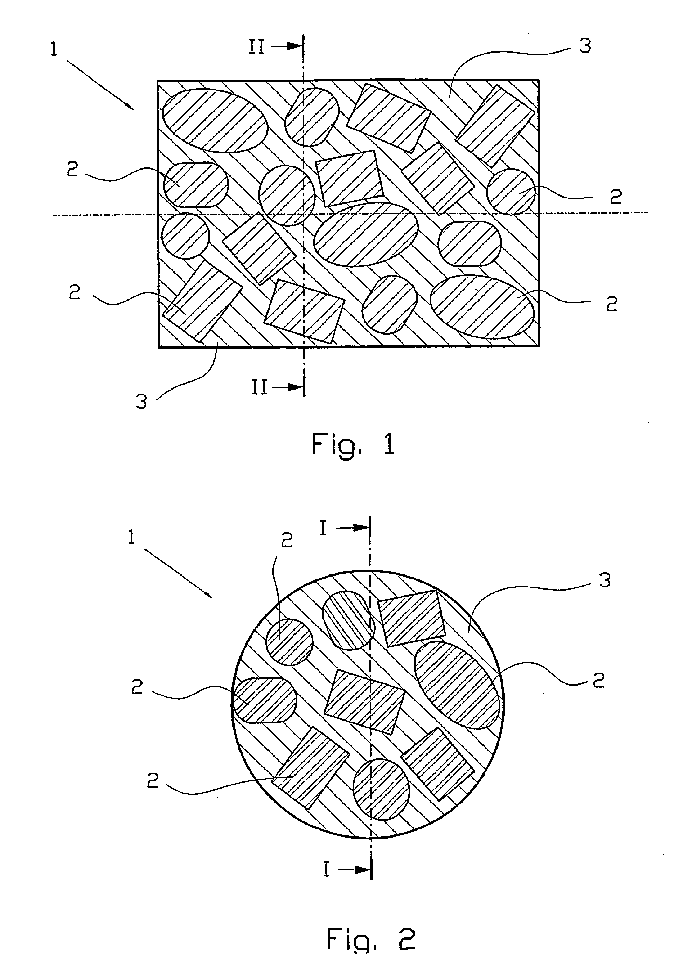

Figure 1 schematically shows a longitudinal section through a cylinder shaped feed block;
Figure 2 schematically shows a cross section through a cylinder shaped feed block; and

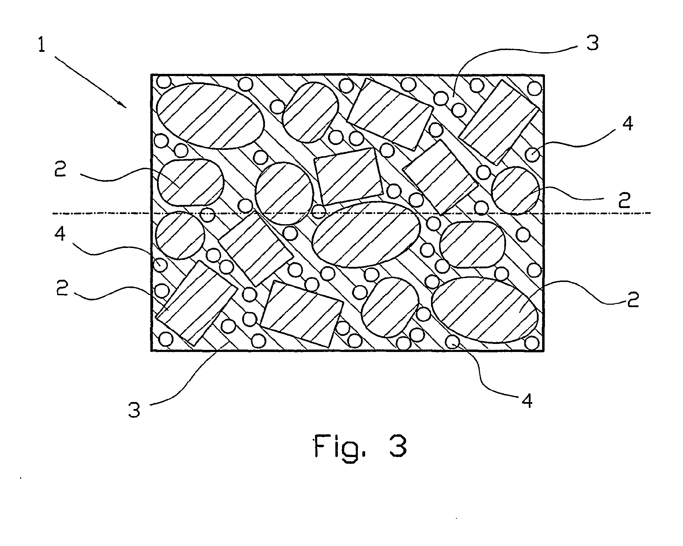

Figure 3 schematically shows a longitudinal section through a cylinder shaped feed block into which gas bubbles have been mixed in order to reduce the specific weight of the feed block.

In the drawings, reference number 1 denotes a feed block containing feed pellets 2 surrounded by a binding agent 3, which can be an aqueous gel or a firm fat.

In an alternative embodiment, gas bubbles 4 have been added to the aqueous gel.

The object of the invention was achieved through the following test production:

### Example 1

25 grams of powdered gelatine was mixed into 1.0 litre of water. Dry fish feed pellets with a diameter of 12 mm and composed of 33% protein, 40% fat, wheat, water, minerals, vitamins and astaxanthine, were distributed into a cylindrical container with a diameter of 8 cm and a height of 12 cm, and into a cylindrical plastic bag with a diameter of 5.5 cm and a length of 37 cm, so that these were nearly full of pellets. Similarly, fish feed pellets with a diameter of 4 mm and composed of 47% protein, 30% fat, wheat, water, minerals, vitamins and astaxanthine, were distributed into a cylindrical container with a diameter of 3 cm and a height of 5 cm. The three containers were filled with the gelatine-containing liquid until they were nearly full. With this, the gelatine-containing liquid filled all cavities between the cylindrical dry pellets. Then the containers of pellets and gelatine were placed in a refrigerator at 6°C over night.

The large-size fish blocks were removed from the containers. Ranged according to decreasing weight, these weighed approximately 800 grams, 600 grams and 35 grams. The surface was soft and elastic, the mechanical strength was sufficient to allow the blocks to be handled, and they sank in seawater. The oil content of the dry pellets used inhibits their absorption of liquid, and so the pellets kept their colour and shape in the feed block for a long period of time.

### Example 2

1.0 grams of Na-alginate, 1.0 grams of xanthane, 1.0 grams of carob bean gum (or locust bean gum) and 0.25 grams of CaCl₂·2H₂O were dissolved in 0.3 litres of hot water (85°C). The feed pellets, with a diameter of 6 mm and composed of 44% protein, 32% fat, wheat, water, minerals, vitamins and astaxanthine, were filled in a plastic bag of 8 x 12 cm. The plastic bag was filled up with jellification liquid. The plastic bag and its contents were placed in a refrigerator at 6°C over night. The plastic was removed and a large pillow shaped fish feed block of approximately 135 grams was removed. The surface was soft and elastic. The mechanical strength was sufficient to allow the block to be handled, and it sank in seawater.

### Example 3

3.0 grams of xanthane, 3.0 grams of carob bean meal and 3.6 grams of NaCl were dissolved in 0.3 litres of water that was heated up to 60°C. Feed pellets of the same type as that described in Example 2 were filled in a plastic bag as described in Example 2. The plastic bag and its contents were placed in a refrigerator at 6°C over night. The plastic was removed and a large pillow shaped fish feed block weighing approximately 135 grams was removed. The surface was soft and elastic. The mechanical strength was sufficient to allow the block to be handled, and it sank in seawater.

### Example 4

5 grams of alginate was dissolved in 500 ml of cold water and the mixture was brought to the boil while stirring. A container with a diameter of 5 cm and a height of 6.5 cm was filled with 94 grams of feed pellets. The feed pellets had a diameter of 12 mm and were of the same type as that of example 1. The container was filled up with 34 grams of the alginate solution. The container was placed upside down in a hydrogen chloride solution containing 2% CaCl₂·2H₂O and having a pH of approximately 1.5. The solution was at room temperature. The contents were slowly poured out, immediately forming a firm gel with the same shape as that of the container. The surface was soft and elastic. The mechanical strength was sufficient to allow the block to be handled, and it sank in seawater.

### Example 5

Dry 1% CaCl₂·2H₂O was applied to the surface of feed pellets of the same type as that described in Example 4. The mixture of feed pellets and CaCl₂ salt (17 grams) was filled on a cylindrical container having a diameter of 3 cm and a height of 5 cm, and the container was filled up with 17.5 grams alginate solution. The container was placed upside down in a bath of hydrochloric acid (pH approximately 1.5). The contents were slowly poured out, immediately forming a firm gel with the same shape as that of the container. The surface was soft and elastic. The mechanical strength was sufficient to allow the block to be handled, and it sank in seawater.

### Example 6

The example was performed as Example 5, but 1% of a ready mixed commercially available dye solution (red confectioner's colouring, E-100 and E-120 (curcumin and carmines)) was added to the alginate solution. The finished feed block had a pale pink colouring.

### Example 7

Hardened rapeseed oil consisting of C16:0; 4 %, C18:0; 40 %, C20:0; 10 %; C22:0; 42 %; C24:0; 1 %, other 3 %, was heated to 100 °C, and the melted fat was mixed with fish feed pellets with a diameter of 4 mm and of the same type as described in Example 1. The mixture of melted fat and fish feed was poured into a cylinder shaped mould with a diameter of 3 cm and a height of 5 cm. Thereafter the mould with its content was put aside for cooling. The finished feed block weighed 35 g of which 21 g was feed pellets. This feed block sank in fresh water.

There are a number of edible gels and edible fats that may be used for this purpose. Thus the invention is not limited to the gels and fats described in the examples.

In the examples, the liquid used to create the gels is fresh water. Using seawater or water containing dissolved salts can increase the mass of the feed block in the event of a higher sinking speed being required.

When using gel as the binding agent it may, for certain purposes, be expedient to use a liquid consisting of a mixture of water and oil. The oil may be fish oil or vegetable oil. The mixture may be a dispersion or an emulsion, where the quantity of oil is limited by the jellification properties of the jellification substance. Such a mixture will have a lower specific gravity than water, thus reducing the sinking speed of the feed block or possibly making it float. The oil may also give the feed block a better flavour. The oil will also increase the energy content of the feed block, thus making it possible to increase the nutritional value of the feed block compared with the nutritional value of the dry feed pellets.

In order to give a lower sinking speed or a floating feed block, air or gas may be whipped into the binding agent before it is fully jellified in the case of using a gel, alternatively stiffened to a firm mass in the case of using fat.

The liquid used may also be a protein-containing liquid such as stickwater from the production of fishmeal or process water from the production of surimi. It would also be natural to add vitamins and minerals to the jellification liquid. This may be advantageous in those cases where these nutrients are otherwise partially destroyed in the process used to produce the dry feed. It would also be natural to make a suspension from liquid and insoluble nutrients if appropriate.

It is also obvious that dust and small fragments from the ordinary dry feed production may be mixed into the jellification liquid or, alternatively, in the melted fat.

When using gel as a binding agent the high water content of the large feed block makes it necessary to add preservatives in those cases where the block is to be stored prior to being used. The preservatives will prevent the growth of bacteria, yeast and mould. All preservatives known from the food industry may be used, as long as their taste is acceptable to the animal for which the feed block is intended. Examples of such preservatives are salts of sorbate and organic acids such as propionic acid. When using firm fat as a binding agent it may be appropriate to add one or more anti-oxidants as preservatives.

For certain types of gel it may be appropriate to apply accessory agents to the surface of the dry feed pellets prior to mixing with jellification liquid. As an example, Ca ions will promote the gel-formation in an alginate solution. The accessory agents may be applied in the form of powders, or they may be sprayed onto the surface as a solution, e.g. an aqueous solution.

The invention is not limited to the use of dry pellets or formulated particles having water content of less than 10%. Pellets with higher water contents may be used, as these pellets in themselves may contain preservatives that render them suitable for storage from the time of production until they undergo further processing such as described in the patent application.

The invention is not limited to the use of dry pellets to which oil has been added prior to or during the formation step or in a subsequent oil saturation process. If the requirement is for a particularly lean feed, the feed block may be made from dry feed pellets containing no extra fat beyond that which is present in the dry raw materials, such as fish meal, soya, rape and wheat.

The invention includes the use of differently shaped dry pellets and is not limited to cylindrical dry pellets or pellets having an oval cross section. Consequently, dry pellets of any shape and cross section may be used, including spherical pellets and pellets having surface depressions or cavities or one or more through holes both in the longitudinal direction and at any other angle to the longitudinal axis. Thus it is also possible to mix dry pellets of various shapes and sizes prior to the addition of binding agent in form of jellification liquid or melted fat.

Taste stimulants may be added to the jellification liquid, alternatively to the melted fat, in an amount suitable to make the taste acceptable to the animal to be fed. Taste stimulants may also be added to the dry pellets at any stage of the process, including the taste stimulant or stimulants being applied to the surface of dry pellets. Consequently the taste stimulants may diffuse completely or partially into the gel, alternatively diffuse into the binding fat, during storage.

Colouring agents may be added to the gel if this is appropriate in order to make the feed block more attractive to the animal to be fed. Colouring agents may also be added to the dry pellets at any stage of the process, including colouring agents being applied to the surface of dry pellets. Differently coloured dry pellets may be mixed prior to mixing with the jellification liquid, alternatively with the melted fat, thereby giving the feed block a motley appearance. A more controlled process would allow the creation of various colour patterns in the feed block.

The feed block may have any appropriate shape such as e.g. a sphere, cylinder, pillow, cigar. Different moulding techniques may also give e.g. fish shaped feed blocks. This would be suitable for feeding animals in captivity, e.g. marine mammals such as seals, sea lions and dolphins, or birds such as penguins. Such pellets would replace the fresh whole fish used today. This will make it possible to adjust the nutritional value of the feed, with a special advantage of being able to add vitamins and minerals.

## Claims

1. A feed block (1) containing formulated and pelleted dry feed for the farming of fish and feeding of marine mammals and birds, **characterized in that** two or more pellets (2) are conglutinated by filling the space between the pellets (2) with a binding agent (3).

2. A feed block (1) in accordance with Claim 1, **characterized in that** the binding agent (3) is a gel-forming liquid.

3. A feed block (1) in accordance with Claim 1, **characterized in that** the binding agent (3) is a fat.

4. A feed block (1) in accordance with Claim 1 combined with claim 2, **characterized in that** one or more preservatives are added to the pelleted dry feed (2) or to the binding agent (3) or to both (2, 3).

5. A feed block (1) in accordance with Claim 1, **characterized in that** one or more colouring agents are added to the binding agent (3).

6. A feed block (1) in accordance with Claim 1, **characterized in that** one or more flavour additives are added to the binding agent (3).

7. A feed block (1) in accordance with Claim 3, **characterized in that** one or more anti-oxidants are added to the fat (3).

8. A feed block (1) in accordance with Claim 2, **characterized in that** the gel-forming liquid (3) is a mixture of oil and water, which mixture has formed a dispersion or an emulsion.

9. A feed block (1) in accordance with Claim 1, **characterized in that** the specific gravity of the feed block (1) is less than 1.03 kg/dm³ through gas bubbles (4) being whipped into the binding agent (3).

10. A feed block (1) in accordance with one of the preceding claims, **characterized in that** the shape and size of the feed block (1) are limited only by the mechanical properties of the binding agent (3).

## Patentansprüche

1. Formuliertes und pelletiertes trockenes Futtermittel enthaltender Futtermittelblock (1) zum Züchten von Fisch und zum Füttern von Meeressäugetieren und Vögeln, **dadurch gekennzeichnet, dass** zwei oder mehrere Pellets (2) durch Füllen des Raums zwischen den Pellets (2) mit einem Bindemittel (3) zusammengeklebt sind.

2. Futtermittelblock (1) nach Anspruch 1, **dadurch gekennzeichnet, dass** das Bindemittel (3) eine gelbildende Flüssigkeit ist.

3. Futtermittelblock (1) nach Anspruch 1, **dadurch gekennzeichnet, dass** das Bindemittel (3) ein Fett ist.

4. Futtermittelblock (1) nach Anspruch 1 kombiniert mit Anspruch 2, **dadurch gekennzeichnet, dass** dem pelletierten trockenen Futtermittel (2) oder dem Bindemittel (3) oder beiden (2, 3) ein oder mehrere Konservierungsmittel zugesetzt sind.

5. Futtermittelblock (1) nach Anspruch 1, **dadurch gekennzeichnet, dass** dem Bindemittel (3) ein oder mehrere Farbmittel zugesetzt sind.

6. Futtermittelblock (1) nach Anspruch 1, **dadurch gekennzeichnet, dass** dem Bindemittel (3) ein oder mehrere Aromazusatzstoffe zugesetzt sind.

7. Futtermittelblock (1) nach Anspruch 3, **dadurch gekennzeichnet, dass** dem Fett (3) ein oder mehrere Antioxidantien zugesetzt sind.

8. Futtermittelblock (1) nach Anspruch 2, **dadurch gekennzeichnet, dass** die gelbildende Flüssigkeit (3) eine Mischung aus Öl und Wasser ist, die eine Dispersion oder eine Emulsion gebildet hat.

9. Futtermittelblock (1) nach Anspruch 1, **dadurch gekennzeichnet, dass** das spezifische Gewicht des Futtermittelblocks (1) durch in das Bindemittel (3) geschlagene Gasblasen (4) kleiner als 1,03 kg/dm³ ist.

10. Futtermittelblock (1) nach einem der vorhergehenden Ansprüche, **dadurch gekennzeichnet, dass** die Form und die Größe des Futtermittelblocks (1) nur durch die mechanischen Eigenschaften des Bindemittels (3) begrenzt sind.

## Revendications

1. Bloc alimentaire (1) contenant un aliment sec formulé et granulé destiné à l'élevage piscicole et à l'alimentation de mammifères et d'oiseaux marins, **caractérisé en ce que** deux ou plusieurs granulés (2) sont agglomérés en remplissant l'espace entre les granulés (2) avec un agent liant (3).

2. Bloc alimentaire (1) selon la revendication 1,
**caractérisé en ce que** l'agent liant (3) est un liquide gélifiant.

3. Bloc alimentaire (1) selon la revendication 1,
**caractérisé en ce que** l'agent liant (3) est une graisse.

4. Bloc alimentaire (1) selon la revendication 1 combinée à la revendication 2, **caractérisé en ce qu'**un ou plusieurs conservateurs sont ajoutés à l'aliment sec granulé (2) ou à l'agent liant (3) ou aux deux (2, 3).

5. Bloc alimentaire (1) selon la revendication 1,
**caractérisé en ce qu'**un ou plusieurs agents colorants sont ajoutés à l'agent liant (3).

6. Bloc alimentaire (1) selon la revendication 1,
**caractérisé en ce qu'**un ou plusieurs additifs aromatisants sont ajoutés à l'agent liant (3).

7. Bloc alimentaire (1) selon la revendication 3,
**caractérisé en ce qu'**un ou plusieurs antioxydants sont ajoutés à la graisse (3).

8. Bloc alimentaire (1) selon la revendication 2,
**caractérisé en ce que** le liquide gélifiant (3) est un mélange d'huile et d'eau, lequel mélange a formé une dispersion ou une émulsion.

9. Bloc alimentaire (1) selon la revendication 1,
**caractérisé en ce que** la densité spécifique du bloc alimentaire (1) est inférieure à 1,03 kg/dm³ à travers des bulles de gaz (4) fouettées dans l'agent liant (3).

10. Bloc alimentaire (1) selon l'une quelconque des revendications précédentes, **caractérisé en ce que** la forme et la taille du bloc alimentaire (1) ne sont limitées que par les propriétés mécaniques de l'agent liant (3).
